# EUROPEAN PATENT APPLICATION

(11) **EP 2 124 072 A2**
(43) Date of publication of application: **25.11.2009**
(21) Application number: 09160856.2
(22) Date of filing: 20.05.2009
(51) Int. Cl.: G01S 13/88, G01S 13/34

(54) **High integrity radio altimeter**

(30) Priority: 23.05.2008 US 126658
(71) Applicant: Honeywell International Inc., Morristown, NJ 07962 (US)
(72) Inventor: Devensky, Walt, Morristown, NJ 07962-2245 (US)
(74) Representative: Buckley, Guy Julian

(57) **Abstract**

A radio altimeter having a high level of integrity is presented. The radio altimeter includes a processing path configured to process a return signal received from a receive antenna using a first modulation technique and a monitoring path configured to process the return signal received from the receive antenna using a second modulation technique.

## Description

### BACKGROUND

Radio altimeters used in air transport aircraft need to be accurate and to have high integrity. To ensure that altimeters achieve the required integrity specifications, some air transport altimeters are designed to provide Instrument Landing Category III Flight Conditions (CATIII) landing capability. One method of meeting the CATIII specification calls for two processing paths in the radio altimeter. One path provides the altitude output and is referred to herein as the processing path. The other path monitors the altitude output and is referred to herein as the monitoring path. The monitoring path is necessary to assure that an error in the processing path leading to erroneous altitude will be undetected.

When processing signals in digital circuitry, it is difficult to prove the digital circuitry has failed leading to erroneous data. To overcome this problem, received signals are processed in two independent radio altimeter channels to assure the probability of an undetected error meets CATIII criteria. However, the redundant processing on both the processing path and the monitoring path will not detect a common error mode that is operating in the processing path and monitoring path. If identical signals are presented to the processing path and monitoring path, a common mode failure in both channels may not be detected.

Typically, frequency modulated continuous wave (FMCW) is an accepted modulation technique used in most air transport altimeters. Once demodulated, a common signal is fed to both the processing path and the monitoring path of a radio altimeter. Since the characteristics of FMCW are well understood and FMCW produces a low frequency response, it is easily processed by digital circuitry.

Procedural techniques are used to assure that both the processing and the monitoring paths are producing the same valid data. Since procedural techniques are difficult to quantitatively assess if both the processing and the monitoring paths are producing the same erroneous data, the radio altimeter integrity cannot be theoretically determined without making some assumptions about the error rates of the procedures used.

### SUMMARY

The present application relates to a radio altimeter. The radio altimeter includes a processing path configured to process a return signal received from a receive antenna using a first modulation technique and a monitoring path configured to process the return signal received from the receive antenna using a second modulation technique.

### DRAWINGS

Figure 1 is a block diagram of an altimeter system in accordance with an embodiment of the present invention.

Figure 2 is a block diagram of a radio altimeter in accordance with an embodiment of the present invention.

Figure 3 is a block diagram of radio altimeter in accordance with an embodiment of the present invention.

Figure 4 is a flow diagram of a method to implement a radio altimeter in accordance with an embodiment of the present invention.

In accordance with common practice, the various described features are not drawn to scale but are drawn to emphasize features relevant to the present invention. Like reference characters denote like elements throughout figures and text.

### DETAILED DESCRIPTION

In the following detailed description, reference is made to the accompanying drawings that form a part hereof, and in which is shown by way of illustration specific embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

Radio altimeters are installed in aircraft to measure the altitude from the aircraft to the ground and provide that information to the pilot. Radio altimeters implement transmit and receive antennas and operate in the frequency band ranging from 4.2 GHz to 4.4 GHz. A signal emitted from the transmit antenna is reflected from the ground beneath the aircraft and the reflected signal is received as a return signal at the receive antenna. Processors in the aircraft measure the time delay between the send-time when the transmitted signal was sent and the receive-time when the return signal was received. The measured time delay is used determine the distance traveled by the signal and hence the altitude of the aircraft. The radio altimeter is not used in conjunction with a ground station. Therefore, the transmission signal modulation used to measure the delay is not specified. The radio altimeter designer is able to select any form of modulation as long as the modulated signal remains within the 4.2 GHz to 4.4 GHz region of the frequency spectrum.

A radio altimeter having a high level of integrity is described herein. The radio altimeter comprises a transmitter configured to generate a transmitted signal using two modulation techniques, and a receiver configured to process the return signal from the ground using a processor that extracts the altitude from the first modulation technique and a monitor processor that extracts the altitude from the second modulation technique. The altitude outputs from both processors are compared for accuracy. Since each processor uses different demodulation techniques, the probability of a common mode error that could produce an erroneous altitude is minimized. One modulation is processed by the primary processing channel (also referred to herein as the processing path) while the other modulation is processed by the monitor channel (also referred to herein as the monitoring path) to produce a return signal that provides altitude information from the two independent modulation schemes. Since the processing path and the monitoring path each implement a different modulation technique, the paths cannot share a common processing error and the generated altitude has an extremely high integrity. In one implementation of this embodiment, the code division multiple access (CDMA) modulation technique is combined with the FMCW modulation technique. In another implementation of this embodiment, the CDMA modulation technique is combined with the pulse width modulation technique. In other implementations of this embodiment, a FMCW or a pulse modulation technique is combined with a coded modulation technique.

The radio altimeter described herein has radio altimetry integrated circuits that include encoders and decoders operable to process the CDMA signals. For this high integrity scheme, the main processor and the monitor processor in the radio altimeter do not have to operate on the same signal since either processor can decode a CDMA modulated signal.

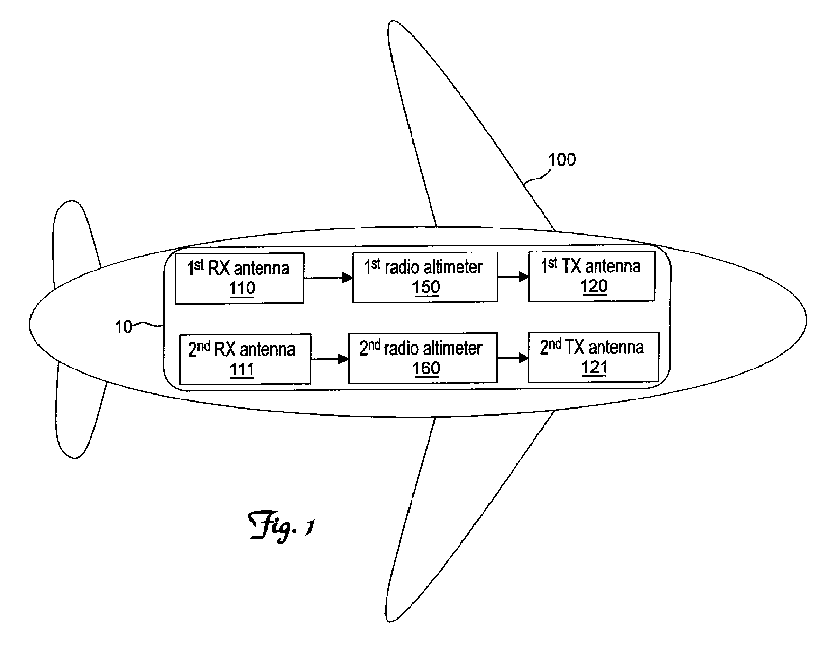

Figure 1 is a block diagram of an altimeter system 10 in accordance with embodiment of the present invention. As shown in Figure 1, the altimeter system 10 is located in an aircraft 100 and includes a radio altimeter 150 (also referred to herein as "first radio altimeter 150") and a radio altimeter 160 (also referred to herein as "second radio altimeter 160"). The first radio altimeter 150 is communicatively coupled to a first receive antenna 110 and a first transmit antenna 120. The second radio altimeter 160 is communicatively coupled to a second receive antenna 111 and a second transmit antenna 121. The first radio altimeter 150 and the second radio altimeter 160 provide redundancy in the event that one of the radio altimeters loses the signal. The altitude information for the aircraft 100 is separately developed by each of the first radio altimeter 150 and the second radio altimeter 160 in the aircraft 100.

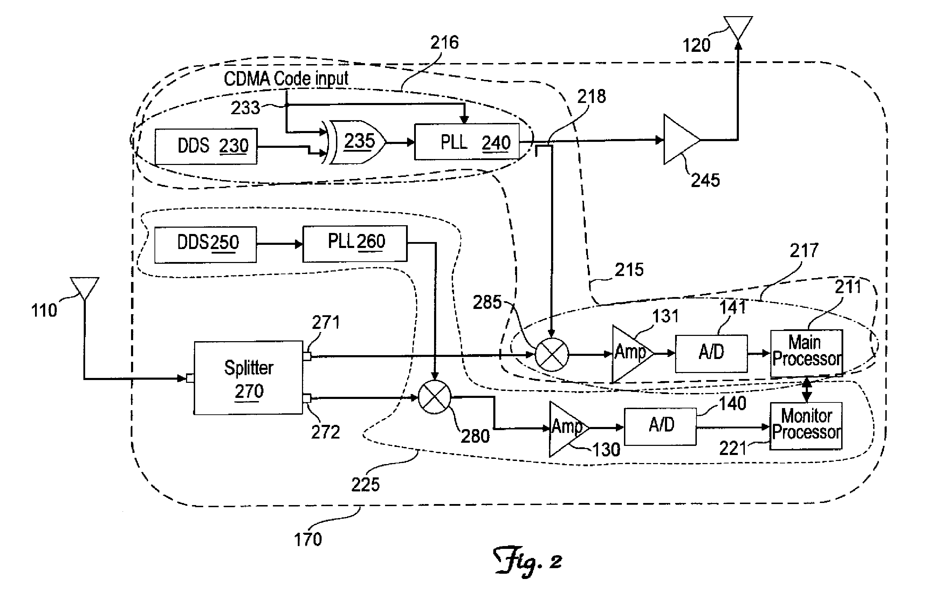

The first radio altimeter 150 and the second radio altimeter 160 in the radio altimeter system 10 shown in Figure 1 each include two separate paths that implement two respective modulation techniques. The first radio altimeter 150 and the second radio altimeter 160 each include a processing path implementing one modulation technique to generate a processed altitude and a monitoring path implementing another modulation technique to generate a monitored altitude as is described in detail below with reference to Figure 2. The first radio altimeter 150 performs a cross-check of the internally generated processed altitude and the monitored altitude to ensure they are within an acceptable margin of error to each other. Likewise, the second radio altimeter 160 performs a cross-check of the internally generated processed altitude and the monitored altitude to ensure they are within an acceptable margin of error to each other.

In one implementation of this embodiment, there are three altimeters on board the aircraft 100. In this case, each of the three radio altimeters is connected to its own pair of transmit/receive antennas and produces a signal that provides altitude information indicative of from one modulation technique that is independently monitored by another modulation technique.

Figure 2 is a block diagram of a radio altimeter 170 in accordance with an embodiment of the present invention. The radio altimeter 170 shown in Figure 2 is representative of the first radio altimeter 150 and/or the second radio altimeter 160 shown in Figure 1.

The radio altimeter 170 includes a processing path represented generally at 215 and a monitoring path represented generally at 225. The processing path 215 includes a first portion represented generally at 216 and a second portion represented generally at 217. As shown in Figure 2, the radio altimeter 170 sends signals from the transmit antenna 120 and receives signals from the receive antenna 110. The first portion 216 of the processing path 215 outputs signals to the transmit antenna 120. The return signal received from the receive antenna 110 is split into two duplicate signals at the splitter 270. The duplicated signal output from a first output 271 of the splitter 270 is processed in the second portion 217 of the processing path 215 5 with the FMCW modulation technique (also referred to herein as a first modulation technique). The duplicated signal output from a second output 272 of the splitter 270 is processed in the monitoring path 225 with the CDMA modulation technique (also referred to herein as a second modulation technique).

The processing path 215 includes a first direct digital synthesizer (DDS) 230, a CDMA code input 233, an exculsive OR gate 235, a first phase-locked loop circuit (PLL) 240, a coupler 218, a first mixer 285, a first amplifier 131, a first analog-to-digital convertor (A/D) 141, and a main processor 211. The first portion 216 of the processing path 215 includes the first direct digital synthesizer 230, the CDMA code input 233, the exculsive OR gate 235, and the first phase-locked loop circuit 240. The second portion 217 of the processing path 215 includes the first mixer 285, the first amplifier 131, the first analog-to-digital convertor (A/D) 141, and the main processor 211.

The monitoring path 225 includes a second direct digital synthesizer (DDS) 250, a second phase-locked loop circuit (PLL) 260, a second mixer 280, a second amplifier 130, a second analog-to-digital convertor (A/D) 140, and the monitor processor 221. The monitoring path 225 processes the return signal received from the receive antenna 110 using the second modulation technique. The monitor processor 221 and the main processor 211 are communicatively coupled to exchange altitude data with each other.

A direct digital synthesizer is an electronic method for digitally creating frequencies from a single, fixed source frequency as is known in the art. A phase-locked loop (PLL) is a control system that generates a signal that has a fixed relation to the phase of a reference signal." A phase-locked loop circuit responds to both the frequency and the phase of the input signals, automatically adjusting the frequency of the direct digital synthesizer until it is locked to the CDMA code. In other implementations of this embodiment, the direct digital synthesizers, the phase-locked loop circuits, and the exclusive OR gate are replaced by other circuits that provide the equivalent functionality.

Within the processing path 215, the first direct digital synthesizer 230 outputs FMCW signals to the exculsive OR gate 235. The CDMA code input 233 recives a CDMA code and outputs the CDMA code to the exculsive OR gate 235 and the first phase-locked loop circuit 240. The first phase-locked loop circuit 240 is communicatively coupled to receive the output of the exculsive OR gate 235. The coupler 218 receives a FMCW signal that is locked to the CDMA code from the first phase-locked loop circuit 240. The first phase-locked loop circuit 240 sends the FMCW signal locked to the CDMA code to the transmit antenna 120 and the first mixer 285. The FMCW signal that is locked to the CDMA code is amplified by a power amplifier 245 prior to being transmitted from the transmit antenna 120.

In this manner, the first modulation technique and the second modulation technique are implemented on data sent from the transmit antenna 120 via the first portion 216 of the processing path 215. For the embodiment shown in Figure 1, the output from the transmit antenna 120 is a FMCW swept signal that is subjected to 180° phase changes based on the CDMA code.

Within the monitoring path 225, the second direct digital synthesizer 250 is programmed with the FMCW signals that track the FMCW signals output by the first direct digital synthesizer 230 in the processing path 215. The second phase-locked loop circuit 260 is communicatively coupled to receive the output of the second direct digital synthesizer 250 and the second mixer 280 is configured to receive the output from the second phase-locked loop circuit 260.

The first mixer 285 mixes the output received from the first phase-locked loop circuit 240 (via the coupler 218) with the return signal received from the receive antenna 110 and outputs information indicative of a frequency delay that is related to an altitude of the altimeter 170. The duplicated return signal that is output from the first output 271 and the second output 272 of the splitter 270 is the swept frequency signal that is modulated by the CDMA code. At the first mixer 285, this return signal is mixed with the signal coming from the coupler 218, which is also the swept frequency signal that is modulated by the CDMA code. The output from the first mixer 285 is the beat frequency or difference frequency between the mixed signals due to the delay in the reflected return signal. The delay in the return signal is related to the distance propagated by the signal that was transmitted from the transmit antenna 120 and reflected from the earth below the aircraft 100 (Figure 1). The main processor 211 determines the altitude of the aircraft 100 carrying the radio altimeter 170 based on this frequency difference. Information related to the CDMA code is lost by the mixing of the signals at the first mixer 285. In this manner, the first portion 216 of the processing path 215 is configured to transmit signals implementing the first modulation technique and the second modulation technique (such as, the FMCW modulation technique and CDMA modulation technique, respectively) from a transmit antenna 120 and the second portion 217 of the processing path 215 configured to process a return signal received from the receive antenna 110 using the first modulation technique (such as the FMCW modulation technique).

The second mixer 280 mixes the output received from the second phase-locked loop circuit 260 with return signal received from the receive antenna 110 to output information indicative of a CDMA-code delay that is associated with the altitude. Specifically, the second mixer 280 mixes the swept frequency signal, which is output from the second phase-locked loop circuit 260, with the return signal, which is output from the second output 272 of the splitter 270. In the monitoring path 225, the CDMA code is only modulating the return signal being mixed at the second mixer 280. Since the CDMA code is not on the signal output from the second phase-locked loop circuit 260, the CDMA code is not lost by the mixing. The output of the second mixer 280 is the delayed CDMA code, which is output to an amplifier (Amp) 130, an analog-to-digital convertor (A/D) 140 and the monitor processor 221.

The delay in the CDMA code is related to the distance propagated by the signal that was transmitted from the transmit antenna 120 and reflected from the earth below the aircraft 100 (Figure 1). The monitor processor 221 determines the altitude of the aircraft 100 carrying the radio altimeter 170 based on this CDMA code delay. In this manner, the monitoring path 225 is configured to process the return signal received from the receive antenna 110 using a second modulation technique (such as the CDMA modulation technique).

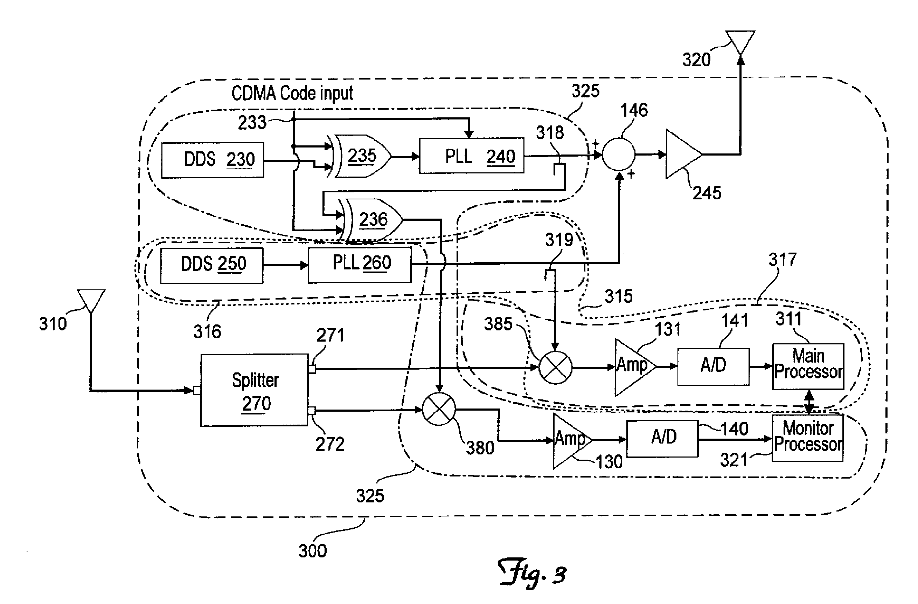

Figure 3 is a block diagram of a radio altimeter 300 in accordance with an embodiment of the present invention. The radio altimeter 300 shown in Figure 3 is representative of the first radio altimeter 150 and/or the second radio altimeter 160 shown in Figure 1. The radio altimeter 300 has a high level of integrity. The processing path represented generally at 315 in Figure 3 differs from the processing path 215 in Figure 2. Likewise, the monitoring path represented generally at 325 in Figure 3 differs from the monitoring path 225 in Figure 2. The circuits in Figure 3 include the exculsive OR gate 235 and a second exculsive OR gate 236, and two couplers 318 and 319. The exculsive OR gate 235 is referred to as a first exculsive OR gate 235 with reference to Figure 3.

The radio altimeter 300 includes the processing path 315 and the monitoring path 325. The processing path 315 includes a first portion represented generally at 316 and a second portion represented generally at 317. As shown in Figure 3, the radio altimeter 300 sends signals from the transmit antenna 320 and receives signals from the receive antenna 310. The first portion 316 of the processing path 315 outputs signals to the transmit antenna 320 via the summing circuit 146, and power amplifier 245. The signal received from the receive antenna 310 is split into two duplicate signals at the splitter 270. The duplicated signal output from a first output 271 of the splitter 270 is processed in the second portion 317 of the processing path 315 with the FMCW modulation technique (also referred to herein as a first modulation technique). The duplicated signal output from a second output 272 of the splitter 270 is processed in the monitoring path 325 with the CDMA modulation technique (also referred to herein as a second modulation technique).

The processing path 315 includes a second direct digital synthesizer 250, a second phase-locked loop circuit 260, a coupler 319, a first mixer 385, a first amplifier 131, a first analog-to-digital convertor (A/D) 141, and a main processor 311. The first portion 316 of the processing path 315 includes the second direct digital synthesizer 250, the second phase-locked loop circuit 260, and the coupler 319. The second portion 317 of the processing path 315 includes the first mixer 385, the first amplifier 131, the first analog-to-digital convertor (A/D) 141, and the main processor 311.

The monitoring path 325 includes a first direct digital synthesizer 230, a first phase-locked loop circuit 240, a CDMA code input 233, a first exculsive OR gate 235, a second exculsive OR gate 236, a coupler 318, a second mixer 380, a second amplifier 130, a second analog-to-digital convertor (A/D) 140, and the monitor processor 321. The monitoring path 325 processes the return signal received from the receive antenna 310 using the second modulation technique. The monitor processor 321 and the main processor 311 are communicatively coupled to exchange data with each other.

Within the monitoring path 325, the first direct digital synthesizer 230 outputs a CW un-modulated signal to the first exculsive OR gate 235. The CDMA code input 233 recives a CDMA code and outputs the CDMA code to the first exculsive OR gate 235, the second exculsive OR gate 236, and the first phase-locked loop circuit 240. The first phase-locked loop circuit 240 is communicatively coupled to receive the output of the first exculsive OR gate 235. The coupler 318 receives a CDMA modulated signal from the first phase-locked loop circuit 240 and sends the CDMA modulated signal from the first phase-locked loop circuit 240 as a second input to the second exculsive OR gate 236. Thus, the output from the second exculsive OR gate 236 represents an I/Q signal (only the I path is shown) from which the CDMA signal has been removed. The I/Q signals output from the second exculsive OR gate 236 are used as a second local oscillator and applied to the second mixer 380.

The summing circuit 146 is configured to receive input from the second phase-locked loop circuit 260 in the first portion 316 of the processing path 315 and is also configured to receive input from the first phase-locked loop circuit 240 in the monitoring path 325. The CDMA code is not on the signal output from the second phase-locked loop circuit 260. The first modulation technique (i.e., the FMCW modulation technique) is implemented on the signal sent from the transmit antenna 320 via the first portion 316 of the processing path 315 (i.e., the second direct digital synthesizer 250, and the second phase-locked loop circuit 260). The CDMA code is on the signal output from the first phase-locked loop circuit 240. The second modulation technique (i.e., the CDMA modulation technique) is implemented on the signal sent from the transmit antenna 320 via a portion of the monitoring path 315 (i.e., the first direct digital synthesizer 230, the first and the exculsive OR gate 235, and the first phase-locked loop circuit 240).

The summed signal is amplified at the power amplifier 245 and is then sent from the transmit antenna 320. In this manner, the first modulation technique and the second modulation technique are implemented on signals (providing information indicative of data) sent from the transmit antenna 320 via the first portion 316 of the processing path 315 and the monitoring path 325. Specifically, for the embodiment shown in Figure 3, the output from the transmit antenna 320 is a FMCW modulated signal and a CDMA code that produces 180° phase changes at a fixed frequency.

The return signal, which is a FMCW modulated signal and CDMA modulated signal, is received at the receive antenna 310 and is output from the first output 271 and the second output 272 of the splitter 270. At the first mixer 385 in the processing path 315, the return signal received from the receive antenna 310 is mixed with the signal received from the second phase-locked loop circuit 260 (via the coupler 319). The signal coming from the coupler 319 is the FMCW modulated signal and is referred to herein as the first local oscillator signal. Thus, the output from the first mixer 385 is the FMCW difference frequency related to the delay in the return signal reflected from the ground. The main processor 311 determines the altitude of the aircraft 100 carrying the radio altimeter 300 based on this FMCW delay. Information related to the CDMA code is lost by the mixing of the signals at the first mixer 385. In this manner, the first portion 316 of the processing path 315 is configured to transmit signals implementing the first modulation technique (such as, the FMCW modulation technique) from a transmit antenna 320 and the second portion 317 of the processing path 315 configured to process a return signal received from the receive antenna 310 using a first modulation technique (such as the FMCW modulation technique).

The second exclusive OR 236 is driven by CDMA code input 233 and the first phase-locked loop circuit 240 through coupler 318. Thus, an un-modulated CDMA carrier signal is output from the second exclusive OR 236. At the second mixer 380 in the monitoring path 325, the return signal received from the receive antenna 310 is mixed with the signal received from the second exclusive OR 236. In this manner, the un-modulated CDMA carrier signal output from the second exclusive OR 236 is mixed with the CDMA modulated signal that was received from the receive antenna 310. In the monitoring path 325, the CDMA code is only modulating one of the signals being mixed at the second mixer 380 so the CDMA code is not lost by the mixing at the second mixer 380. The output of the second mixer 380 is the delayed CDMA code, which is output to an amplifier (Amp) 130, an analog-to-digital convertor (A/D) 140 and the monitor processor 321.

The monitor processor 321 determines the altitude of the aircraft 100 carrying the radio altimeter 300 based on this CDMA code delay. In this manner, a monitoring path 325 is configured to process the return signal received from the receive antenna 310 using a second modulation technique (such as the CDMA modulation technique).

In other implementations of this embodiment, the direct digital synthesizers, the phase-locked loop circuits, and the exclusive OR gates are replaced by other circuits that provide the equivalent functionality.

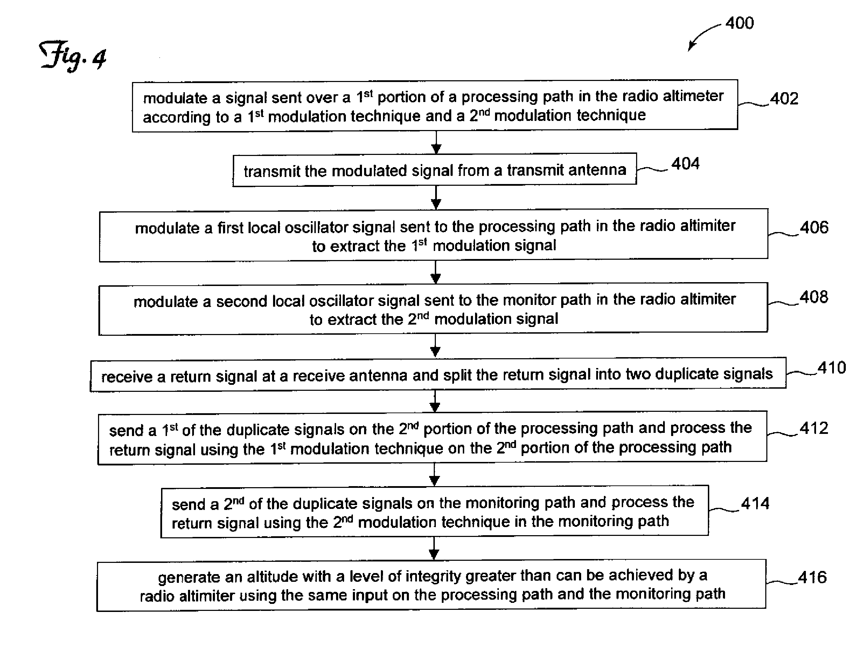

Figure 4 is a flow diagram of a method 400 to implement a radio altimeter in accordance with an embodiment of the present invention. In one implementation of this embodiment, the radio altimeter is the radio altimeter 170 as described above with reference to Figure 2. In another implementation of this embodiment, the radio altimeter is the radio altimeter 300 as described above with reference to Figure 3. It is to be understood that method 400 can be implemented using other embodiments of radio altimeters implementing two modulation techniques as is understandable by one skilled in the art who reads this document.

At block 402, a signal sent over a first portion of a processing path in the radio altimeter is modulated according to a first modulation technique and a second modulation technique. In one implementation of this embodiment, the signal sent over a first portion 216 of a processing path 215 in the radio altimeter 170 is modulated according to a FMCW modulation technique and a CDMA modulation technique (Figure 2).

At block 404, the modulated signal generated at block 402 is transmitted from a transmit antenna, such as transmit antennas 120 and 320 shown in Figures 2 and 3, respectively.

At block 406, a local oscillator signal sent to the processing path in the radio altimeter is modulated to extract the first modulation signal. For example, a first local oscillator signal, which is sent from the coupler 218 to first mixer 285 in the radio altimeter 170, is used to extract the first modulation signal.

At block 408, a local oscillator signal sent to the monitoring path in the radio altimeter is modulated to extract the second modulation signal. For example, a second local oscillator signal, which is sent from the second phase-locked loop circuit 260 to the second mixer 280 in the radio altimeter 170, is used to extract the second modulation signal.

At block 410, a return signal is received at receive antenna 110 and is split into two duplicate signals. In one implementation of this embodiment, the return signal is split at a splitter 270 (Figure 2).

At block 412, a first of the duplicate signals is sent on the second portion of the processing path and the return signal is processed using the first modulation technique in a second portion of the processing path. In one implementation of this embodiment, the first of the duplicate signals is sent on the second portion 217 of the processing path 215 and the return signal is processed using the FMCW modulation technique in the second portion 217 of the processing path 215 (Figure 2). The return signal sent over the second portion 217 of the processing path 215 is used to generate data indicative of a frequency delay. The first mixer 285 outputs a beat signal having the frequency equal to the frequency difference between the return signal and the signal sent from the coupler 218 to the first mixer 285. The frequency difference is also referred to herein as the frequency delay. The main processor 211 generates the altitude based on the frequency delay. In this manner, the main processor 211 uses FMCW modulation techniques to generate the altitude based on the frequency delay of the return signal. The main processor 211 executes software stored in at least one storage medium in the radio altimeter 170 to generate the altitude based on the frequency delay of the return signal.

At block 414, the second of the duplicate signals is sent on the monitoring path and the return signal is processed using the second modulation technique in the monitoring path. In one implementation of this embodiment, the second of the duplicate signals is sent on the monitoring path 225 and the return signal is processed using the CDMA modulation technique in the monitoring path 225 (Figure 2). In this case, the return signal sent over the monitoring path 225 is used to generate data indicative of a delay in the CDMA code. The information indicative of the delay in the CDMA code is output from the second mixer 280. The monitor processor 221 uses CDMA modulation techniques to generate the altitude based on the delay in the CDMA code. The monitor processor 221 executes software stored in at least one storage medium in the radio altimeter 170 to generate the altitude based on the delay in the CDMA code.

At block 416, the radio altimeter generates an altitude with a level of integrity greater than can be achieved by an altimeter using the same input on both channels. As defined herein the "level of integrity greater than can be achieved by an altimeter using the same input on both channels" is a high level of integrity, in which a failure is extremely improbable. In one implementation of this embodiment, a failure is extremely improbable when the failure probability is less than 10⁻⁹. The main processor 211 and the monitor processor 221 exchange and compare data indicative of the generated altitude. If they exchanged altitudes are equal to each other within a selected margin of error, then the generated altitude has a high level of integrity. In one implementation of this embodiment, the main processor 211 receives the altitude generated at the monitor processor 221 and compares the received altitude with the altitude generated at the main processor 211 (Figure 2). Likewise, the monitor processor 221 receives the altitude generated at the main processor 211 and compares the received altitude with the altitude generated at the monitor processor 221.

The radio altimeters and methods of implementing them described herein are capable of generating an altitude with a high level of integrity (i.e., an altitude with a level of integrity greater than altimeters using the same input on both channels). The high level of integrity is based on processing a return signal on the first path with a first modulation technique while processing the return signal on a second processing path with a second modulation technique. A radio altimeter system that implements a plurality of radio altimeter modulation techniques according to embodiments of method 400 reduces common mode errors when generating an altitude having a high level of integrity.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A radio altimeter (170) having a high level of integrity, comprising:
a processing path (215) configured to process a return signal received from a receive antenna (110) using a first modulation technique; and
a monitoring path (225) configured to process the return signal received from the receive antenna using a second modulation technique.

2. The radio altimeter (170) of claim 1, wherein the processing path includes a first portion (216) and a second portion (217),
the first portion configured to transmit a signal implementing the first modulation technique and the second modulation technique from a transmit antenna (120); and
the second portion configured to process the return signal received from the receive antenna (110) using the first modulation technique.

3. The radio altimeter (170) of claim 2, wherein the first modulation technique comprises a frequency modulated continuous wave modulation technique.

4. The radio altimeter (170) of claim 3, wherein the second modulation comprises code division multiple access modulation technique.

5. The radio altimeter (170) of claim 2, wherein the processing path comprises a coupler (218), and wherein the first portion (216) of the processing path (215) comprises:
an exculsive OR gate (235);
a direct digital synthesizer (230) configured to output frequency modulated continuous wave signals to the exculsive OR gate;
a phase-locked loop circuit (240) configured to receive input signals from the exculsive OR gate and to output signals to the coupler; and
a code division multiple access code input configured to send signals to the exculsive OR gate and the phase-locked loop circuit, and wherein the coupler is configured to output signals to a transmit antenna and the second portion of the processing path;
wherein the second portion (217) of the processing path (215) comprises:
a mixer (285) configured to receive the signals output from the coupler (218) and from the receive antenna (110);
an amplifier (131) configured to amplify an output of the mixer;
an analog-to-digital convertor (141) configured to convert the amplified signal; and
a main processor (211) to determine an altitude based on a delay in a code division multiple access code.

6. The radio altimeter (300) of claim 1, further comprising:
a summing circuit (146) configured to receive input from a first phase-locked loop circuit (240) in the monitoring path (325) and configured to receive input from a second phase-locked loop circuit (260) in the processing path (315), the summing circuit operable to send an output to a transmit antenna (320) wherein the code division multiple access modulation technique and the frequency modulated continuous wave modulation technique are implemented on signals sent from the transmit antenna.

7. The radio altimeter (300) of claim 6, wherein the monitoring path (325) comprises:
a direct digital synthesizer (230) configured to output frequency modulated continuous wave signals to a first exculsive OR gate (235);
the first exculsive OR gate and a second exculsive OR gate (236) configured to receive input from a code division multiple access code input;
a phase-locked loop circuit (240) configured to receive output from the first exculsive OR gate; and
a coupler (318) configured to receive output from the phase-locked loop circuit (240) and configured to send output to the second exculsive OR gate (236).

8. The radio altimeter (300) of claim 7, wherein the direct digital synthesizer (230) is a first direct digital synthesizer (230), wherein the phase-locked loop circuit (240) is a first phase-locked loop circuit, and wherein processing path (315) comprises a first portion (316) including:
a second direct digital synthesizer (250); and
the second phase-locked loop circuit (260) communicatively coupled to receive input from the second direct digital synthesizer.

9. The radio altimeter (300) of claim 8, wherien processing path (315) further comprises a second portion (317) including:
a mixer (385) configured to receive the signals output from the second phase-locked loop circuit (260) and from the receive antenna (310);
an amplifier (131) configured to amplify an output of the mixer;
an analog-to-digital convertor (141) configured to convert the amplified signal; and
a main processor (311) to determine an altitude based on a delay in a code division multiple access code.

10. The radio altimeter of claim 9, wherein the mixer (385) is a first mixer, wherein
the first mixer mixes the output received from the second phase-locked loop circuit (260) with the return signal received from the receive antenna (310) and outputs information indicative of a frequency delay that is related to an altitude, and
wherein a second mixer (380) mixes the output received from the second exculsive OR gate (236) with the return signal received from the receive antenna and outputs information indicative of a code division multiple access-code delay that is associated with the altitude.
